(19) Europäisches Patentamt
European Patent Office
Office européen des brevets

(11) Veröffentlichungsnummer: **0 292 786 B1**

(12) **EUROPÄISCHE PATENTSCHRIFT**

(45) Veröffentlichungstag der Patentschrift: **26.08.92**

(51) Int. Cl.$^{5}$: **C08K 5/51**, C08L 69/00

(21) Anmeldenummer: **88107553.5**

(22) Anmeldetag: **11.05.88**

Die Akte enthält technische Angaben, die nach dem Eingang der Anmeldung eingereicht wurden und die nicht in dieser Patentschrift enthalten sind.

# (54) Stabilisiertes Neopentylglykol-Polycarbonat.

(30) Priorität: **23.05.87 DE 3717453**
**23.05.87 DE 3717452**
**23.05.87 DE 3717451**

(43) Veröffentlichungstag der Anmeldung:
**30.11.88 Patentblatt 88/48**

(45) Bekanntmachung des Hinweises auf die Patenterteilung:
**26.08.92 Patentblatt 92/35**

(84) Benannte Vertragsstaaten:
**DE ES FR GB IT**

(56) Entgegenhaltungen:
**EP-A- 0 023 291**
**DE-A- 2 034 887**
**US-A- 4 381 358**

**CHEMICAL ABSTRACTS, Band 106, Nr. 10, 1987, Seite 48, Zusammenfassung Nr. 68332x, Columbus, Ohio, US; & JP-A-61 151 263 (NIPPON POLYURETHANE INDUSTRY CO. LTD) 09-07-1986**

**PATENT ABSTRACTS OF JAPAN, Band 5, Nr. 111 (C-63)[783], 18. Juli 1981; & JP-A-56 50 956 (MITSUBISHI GAS KAGAKU K.K.) 08-05-1981**

(73) Patentinhaber: **BAYER AG**
**W-5090 Leverkusen 1 Bayerwerk(DE)**

(72) Erfinder: **Müller, Friedemann, Dr.**
**Am Steinacker 5**
**W-4040 Neuss 21(DE)**
Erfinder: **Leitz, Edgar, Dr.**
**Goethestrasse 63**
**W-4047 Dormagen 1(DE)**
Erfinder: **Eichenauer, Herbert, Dr.**
**Goethestrasse 71**
**W-4047 Dormagen 1(DE)**
Erfinder: **Ott, Karl-Heinz, Dr.**
**Paul-Klee-Strasse 54**
**W-5090 Leverkusen 1(DE)**
Erfinder: **Buysch, Josef, Dr.**
**Brandenburger Strasse 28**
**W-4150 Krefeld 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft Neopentylglykol-Polycarbonat einschließlich sequenziert aufgebauter Copolymerer aus cyclischen, aliphatischen Carbonaten und Estern oder Vinylverbindungen, die mit Verbindungen des dreiwertigen Phosphors stabilisiert sind.

Aliphatische Polycarbonate sind im Gegensatz zu aromatischen Polycarbonaten thermisch wenig stabil und erleiden bereits bei Temperaturen von ca. 200°C einen Molekulargewichtsabbau, wobei den "back-biting"-Reaktionen der freien Hydroxylgruppen eine wesentliche Bedeutung beigemessen wird [S. Inoue, T. Tsuruta, Appl. Polym. Sym. 26, 257-67(1975) u. D. D. Dixon et. al. J. Polym. Sci., Lett. Ed. 18, 131-34 (1980)]. Sie sind daher ungeeignet für Anwendungen, die thermische Stabilität voraussetzen. Auch sind sie praktisch nicht durch Spritzgießen und Extrusion verarbeitbar.

Aliphatische Polycarbonate haben deshalb im Gegensatz zu aromatischen Polycarbonaten bisher keine technische Bedeutung.

Nach U.S.-PS 4 066 630, 4 066 640, 4 104 264 und 4 145 525 wird durch die Reaktion der freien Hydroxylgruppen mit geeigneten Reagenzien wie hydroxylreaktive Schwefelverbindungen, hydroxylreaktive Phosphorverbindungen, Säureanhydride, Säurechloride oder Isocyanate ein "Verschluß" der Kette bewirkt. "Back-biting"-Reaktionen werden dadurch weitgehend unterdrückt. Durch den Endgruppenverschluß des Polymers allein wird jedoch noch nicht eine für technische Handhabung ausreichende thermische Stabilität erreicht, da der thermische Abbau durch Kettenspaltung weiter auftritt.

Sequenziert aufgebaute Copolymere aus cyclischen, aliphatischen Carbonaten und Estern besitzen - je nach Struktur, Aufbau und chemischer Zusammensetzung - Eigenschaften von elastischen Thermoplasten bis thermoplastischen Elastomeren.

Die Eigenschaften dieser Copolymeren werden durch die polymerisierten Monomeren selbst, deren Mischungsverhältnisse, die Sequenzlängen und Sequenzlängenverteilungen bestimmt. Durch Variation dieser Größen lassen sich Copolymere mit kristallinen oder amorphen bzw. spröden oder zähen Eigenschaften erhalten.

Für eine praktische Anwendung müssen solche Polymeren eine Reihe von Anforderungen erfüllen, z. B.: bei höheren Verarbeitungstemperaturen, stabil sein, damit sie z. B. durch Spritzguß, Extrusion oder Kalandrierung verarbeitet werden können. Die thermische Stabilität eines Polymeren wird nicht nur durch seine chemische Grundstruktur bestimmt, sondern auch durch die Zahl seiner chemischen und strukturellen Fehlstellen, durch die Stabilität des Polymeren erhöhende Strukturen, Endgruppen, die Molekulargewichtsverteilung und seine chemische Uneinheitlichkeit.

Die thermische Stabilität von sequenziert aufgebauten Copolymeren aus cyclischen aliphatischen Carbonaten und Estern wird auch durch die Stabilität der aliphatischen Carbonatsequenzen und Estersequenzen bestimmt.

Aliphatische Polycarbonate, auch als Carbonatsequenzen in Copolymeren, sind im Gegensatz zu aromatischen Polycarbonaten thermisch wenig stabil und werden bereits bei Temperaturen von ca. 200°C abgebaut [S. Inoue, T. Tsuruta, Appl. Polym. Syn. 26, 257-67 (1975) D. D. Dixon et. al. J. Polymer Sci. Lett. Et. 18, 131-34 (1980)].

Die thermische Stabilität von Polyestern aus cyclischen, aliphatischen Estern ist abhängig von der Struktur der Monomeren. Bereits bei Temperaturen von 170 bis 230°C wird ein Abbau beobachtet [K. C. Frisch, S. L. Reegan "Ring-Opening Polymerisation" Marcel-Dekker, Inc. (1969)].

Sequenziert aufgebaute Copolymere aus cyclischen, aliphatischen Carbonaten und Estern sind daher für Anwendungen, die eine hohe thermische Stabilität der Materialien erfordern, nicht geeignet.

Sequenziert aufgebaute Copolymere oder Blockcopolymere aus Blöcken polymerisierter cyclischer, aliphatischer Carbonate und Blöcken polymerisierter Vinylverbindungen, besitzen ebenfalls - je nach Struktur, Aufbau und chemischer Zusammensetzung - Eigenschaften von elastischen Thermoplasten bis thermoplastischen Elastomeren.

Für die praktische Anwendung müssen sie eine Reihe von Anforderungen erfüllen, z. B. bei höheren Verarbeitungstemperaturen stabil sein, damit sie z. B. durch Spritzguß, Extrusion oder Kalandrierung verarbeitet werden können. Die thermische Stabilität eines Polymeren wird nicht nur durch seine chemische Grundstruktur bestimmt, sondern auch durch die Zahl seiner chemischen und strukturellen Fehlstellen, durch die Stabilität des Polymeren erhöhende Strukturen, Endgruppen, die Molekulargewichtsverteilung und seine chemische Uneinheitlichkeit.

Die thermische Stabilität von Blockcopolymeren ist auch abhängig von der thermischen Stabilität der darin enthaltenen Polymerblöcke.

Aliphatische Polycarbonate, auch als Polymerblöcke in Blockcopolymeren aus Carbonaten und Vinylverbindungen, sind im Gegensatz zu Vinylpolymeren thermisch wenig stabil. Sie neigen bereits bei

Temperaturen von ca. 200 °C zu Molekulargewichtsabbau, wobei den "backtiting"-Reaktionen der freien Hydroxylgruppen eine wesentliche Bedeutung beigemessen wird [vergl. D. D. Dixon et. al. J. Polym. Sci. Lett. Ed. 18, 131-134 (1980)]. Nach US-PS 4 066 630, 4 066 640, 4 104 264 und 4 145 525 wird durch die Reaktion der freien Hydroxylgruppen mit z. B. hydroxylreaktiven Schwefelverbindungen, hydroxylreaktiven Phosphorverbindungen, Säureanhydriden, Säurechloriden oder Isocyanaten ein "Verschluß" der Kette bewirkt. Die thermische Stabilität der Polymeren wird dadurch verbessert.

Es wurde gefunden, daß durch Zugabe von 0,2 - 3,0 Gew.-%, vorzugsweise 0,2 - 1,8 Gew.-%, bezogen auf Neopentylglykol-Polycarbonat beziehungsweise sequenziert aufgebautes Copolymer, einer Verbindung des dreiwertigen Phosphors, dessen thermische Stabilität verbessert und thermischer Abbau weitgehend vermieden wird.

Die japanische Patentanmeldung Sho 61/151263 betrifft die Stabilisierung bestimmter aliphatischer Polycarbonate. Sie nennt Neopentylglykol nicht in der Aufzählung verwertbarer Glykole und benutzt in den Ausführungsbeispielen ausschließlich 1,6-Hexandiol. Verwendet werden 1,6-Hexandiolpolycarbonat und Stabilisatormengen von 0,001 bis 0,1 %, erfindungsgemäß dagegen Neopentylglykolpolycarbonat und Stabilisatormengen von 0,2 bis 3 %. Die experimentellen Befunde zeigen deutlich, daß 0,1 % Stabilisator für Neopentylglykolpolycarbonat nicht ausreicht.

Die mit Verbindungen des dreiwertigen Phosphors erreichte Stabilitätszunahme des Neopentylglykol-Polycarbonats - darunter wird hier und im folgenden das Neopentylglykol-Polycarbonat selbst sowie die Block- oder Sequenzcopolymeren mit Estern und mit Vinylverbindungen verstanden - ist weitaus größer als die von aromatischen Polycarbonaten und Polycarbonat-Mischungen (vgl. EP 00 23 291). Damit wird die thermische Stabilität und die Verarbeitungsbreite so verbessert, daß auch thermisch belastende Verarbeitungsverfahren, wie Spritzgießen oder Extrudieren, angewendet werden können.

Zur Vermeidung eines oxidativen thermischen Abbaus können die Verbindungen des dreiwertigen Phosphors mit bekannten Antioxidantien, wie sterisch gehinderten Phenolen in Mengen von 0,05-3,0 Gew.-% kombiniert werden. Für geeignete Antioxidantien siehe Ullmanns Encyclopädie der technischen Chemie, Band 8, S. 19, Verlag Chemie, Weinheim, Bergstraße.

Erfindungsgemäß können als Verbindungen des dreiwertigen Phosphors Phosphite der allgemeinen Formel I

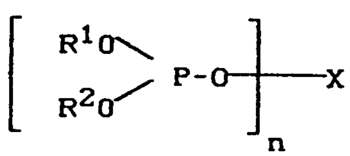

(I)

verwendet werden, in der bedeuten:

| | |
|---|---|
| X | Wasserstoff, einen gegebenenfalls substituierten aliphatischen, cycloaliphatischen oder aromatischen Rest mit 1 bis 18 C-Atomen oder einen Alkaryl oder Aralkylrest mit 7 bis 24 C-Atomen, die auch olefinische Doppelbindungen und Heteroatome (bevorzugt O, S und nichtbasische Stickstoffe) enthalten können, |
| n | eine ganze Zahl von 1 bis 4, vorzugsweise 1 bis 2, entsprechend der Bindigkeit von X, |
| $R^1$ und $R^2$ | unabhängig voneinander $C_1$-$C_{18}$-Alkyl, $C_5$ bis $C_{15}$-Cycloalkyl, $C_7$ bis $C_{24}$-Aralkyl bzw. Alkaryl oder $C_6$ bis $C_{24}$-Aryl, |
| $R^1$ und X | gemeinsam eine gegebenenfalls substituierte $C_2$ bis $C_4$ Alkylenkette |
| $R^1$, $R^2$ und X | zusammen einen geradkettigen oder verzweigten $C_1$ bis $C_9$-Alkyl oder $C_5$ bis $C_7$-Cycloalkylrest, der mit 3-6-gliedrigen cyclischen Resten, die als Heteroatome O und S enthalten, substituiert sein kann. |

Solche Phosphite sind in EP 023 291 beschrieben.

Bevorzugt sind Stabilisatoren der Formel I mit X = Aromat, vorzugsweise substituiert mit $C_1$-$C_9$-Alkylrestenund $R^1$ und $R^2$ = Aromat, vorzugsweise substituiert mit $C_1$-$C_9$-Alkylreste in o- und/oder p-Stellung zur Esterbindung.

Besonders bevorzugt sind Verbindungen der Formel I mit n = 1 und $R_1$ = $R_2$ = X = Aromat, substituiert mit $C_9$-Alkyl.

Geeignet sind ferner Phosphite der allgemeinen Formel II

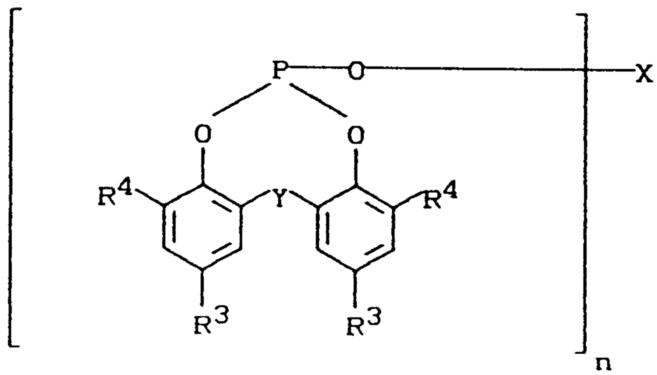

(II)

in der

X und n die oben angegebene Bedeutung haben,

$R^3$ und $R^4$ gleiche oder verschiedene $C_1$-$C_9$ aliphatische $C_5$-$C_6$ cycloaliphatische, $C_7$-$C_9$-Aralkyl oder $C_6$-$C_{10}$-Arylreste bedeuten,

Y für S oder $HCR^5$ steht, wobei $R^5$ = H, $C_1$-$C_6$-Alkyl-, Cyclohexenyl- oder Cyclohexyl.

Besonders bevorzugt sind Verbindungen der Formel (II), in denen

X Wasserstoff,

$R^3$ einen $C_1$-$C_9$-Alkylrest, einen $C_5$-$C_6$-Cycloalkylrest, einen $C_7$-$C_9$-Aralkylrest oder einen $C_6$-$C_{10}$ Arylrest bedeutet,

$R^4$ einen Benzyl-, α-Methylbenzyl-, α,α'-Dimethylbenzyl-, Methyl-, Ethyl-, Isopropyl-, tert.-Butyl-, tert.-Amyl-, Isononyl-, Cyclopentyl- oder Ccylohexylrest darstellt und

Y

für 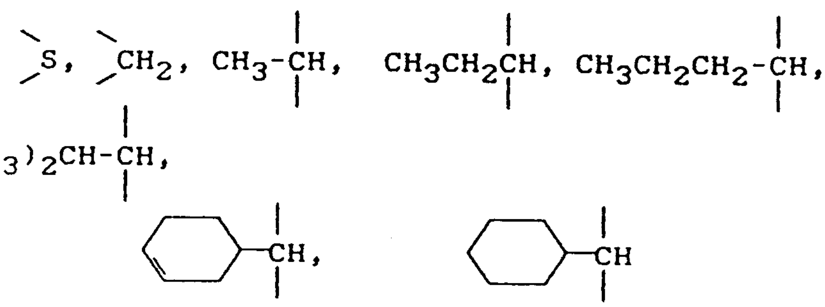

steht.

Diese Phosphite sind in EP 023 291 beschrieben.

Erfindungsgemäß einzusetzende Stabilisatoren sind ferner Phosphite der Formeln III oder IIIa gemäß DE-OS 2 034 887:

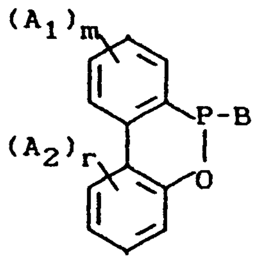

(III)

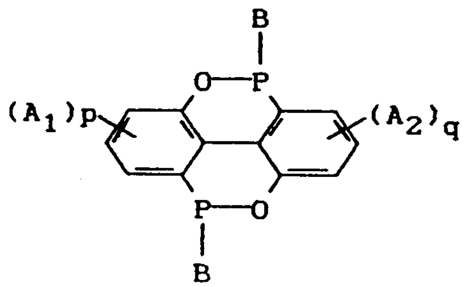

(IIIa)

worin B Wasserstoff, Hydroxyl, Halogen, $C_1$-$C_{22}$-Alkyl, $C_1$-$C_{22}$-Alkoxy, $C_1$-$C_{22}$-Alkylthio, Aryloxy oder Arylthio, $A_1$ und $A_2$, die gleich oder verschieden sein können, Wasserstoff, Halogen, $C_1$-$C_{18}$-Alkyl, $C_1$-$C_{18}$-Alkyloxy, Aryl, Aryloxy, Acyl, Cyan bedeuten, wobei die Reste $A_1$ und $A_2$ zusammen mit dem Biphenylring auch einen Phenanthrenring bilden können, m und r ganze Zahlen von 0 bis 4 und p und q ganze Zahlen von 0 bis 3 darstellen.

Die systematischen Bezeichnungen dieser Organophosphorverbindungen sind sehr kompliziert. Sie besitzen beispielsweise folgende Strukturformeln:

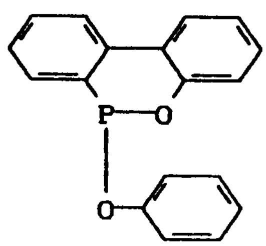

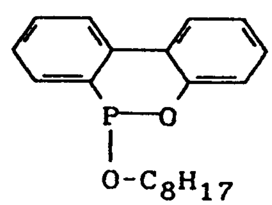

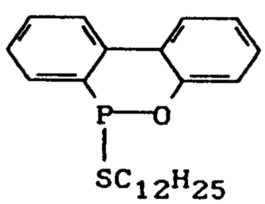

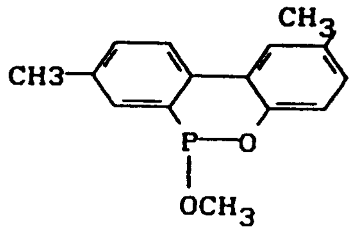

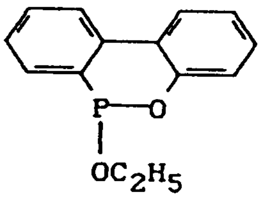

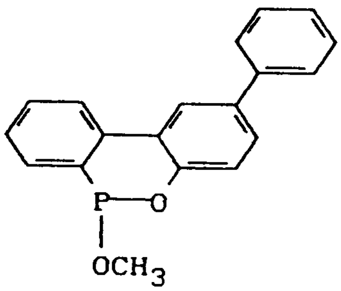

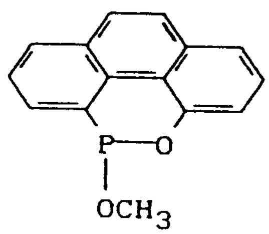

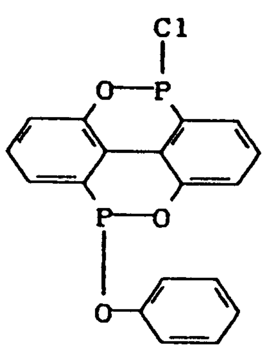

bevorzugt sind solche Verbindungen der Formeln III-IIIa, in denen

| | |
|---|---|
| B | H, OH, $C_1$-$C_{18}$-Alkyl, $C_1$-$C_{18}$-Alkoxy, Aryloxy, Arylthio |
| $A_1$ und $A_2$ | H, $C_1$-$C_9$-Alkyl, $C_1$-$C_9$-Alkoxy, Aryl, Aryloxy, |
| m und r | 0, 1, 2 |
| p und q | 0, 1, 2 bedeuten: |

besonders bevorzugt sind solche, in denen

| | |
|---|---|
| B | H, OH, $C_1$-$C_4$-Alkyl, $C_1$-$C_4$-Alkoxy, Aryloxy, |
| $A_1$ und $A_2$ | H, $C_1$-$C_4$-Alkyl |
| Z | 0 |
| m und r | 0, 1 |
| p und q | 0, 1 ist. |

Erfindungsgemäß einzusetzende Stabilisatoren sind ferner Phosphite der Formel (IV), die aus Pentaerythrit, Perhydrobisphenol A, Monoalkoholen und Phosphorigsäureester zugänglich sind. Sie werden hergestellt, indem man die Komponenten Trialkyl- oder Triphenylphosphit, Pentaerythrit, Perhydrobisphenol und gegebenenfalls einen Monoalkohol in den erforderlichen Molverhältnissen miteinander umestert und dabei den Alkohol aus dem Trialkylphosphit oder Phenol aus dem Triphenylphosphit durch Destillation, gegebenenfalls im Vakuum, bis zu einer Sumpftemperatur von maximal 200° aus dem Gleichgewicht entfernt.

Zweckmäßig setzt man zuerst Pentaerythrit mit dem Phosphit um unter Abdestillieren einer ersten Fraktion von etwa 2 Mol Hydroxyverbindung pro Mol Phosphit, dann gibt man Perhydrobisphenol A hinzu und destilliert während der Umsetzung weitere Hydroxyverbindung ab bis zu einer Sumpftemperatur von vorzugsweise 180°, besonders bevorzugt 170°.

Soll ein $C_6$-$C_{18}$-Monoalkohol mit verwendet werden, so wird dieser vorzugsweise zugegeben, nachdem die zweite Fraktion der Hydroxyverbindung abdestilliert wurde. Nach Zugabe dieses Monoalkohols wird eine dritte Fraktion der Hydroxyverbindung aus dem ursprünglich eingesetzten Phosphit destillativ bis zu einer Sumpftemperatur von vorzugsweise 180°, besonders bevorzugt 170°, gegebenenfalls im Vakuum entfernt.

Arbeiten im Vakuum ist besonders dann erforderlich, wenn mit Triphenylphosphit gearbeitet wird, oder wenn im Endstadium der Umesterung die letzten Reste eines niedrigen Alkohols aus dem Reaktionsgemisch entfernt werden sollen.

Die genannten Komponenten werden in folgenden Molverhältnissen miteinander umgesetzt:

| Komponenten | im allgemeinen | besser | bevorzugt | besonders bevorzugt |
|---|---|---|---|---|
| Perhydrobis-phenol A | 1 | 1 | 1 | 1 |
| Pentaerythrit | 0,5-2,0 | 0,66-1,5 | 0,75-1,3 | 0,80-1,2 |
| Phoshpit | 1,3-4,0 | 1,5-3,5 | 1,6 -3,2 | 1,7 -2,8 |
| Monoalkohol | 0-1,5 | 0-1,0 | 0-0,5 | 0-0,3 |

Geeignete Phosphite sind Triphenylphosphit, bevorzugt Trialkylphosphite aus $C_1$-$C_4$-Alkoholen, besonders bevorzugt Trimethyl- und Triethylphosphit.

Geeignete Monoalkohole sind aliphatische Alkohole mit 6-18 C-Atomen, besonders primäre Alkohole. Genannt seien beispielsweise Isooctanol, Decanol, Dodecanol, Tetradecanol und Octadecanol.

Naturgemäß entstehen bei dieser Synthese durch Umesterung keine einheitlichen Verbindungen,

sondern Gemische von oligomeren Phosphiten, denen überwiegend die folgende Struktur IV zukommt:

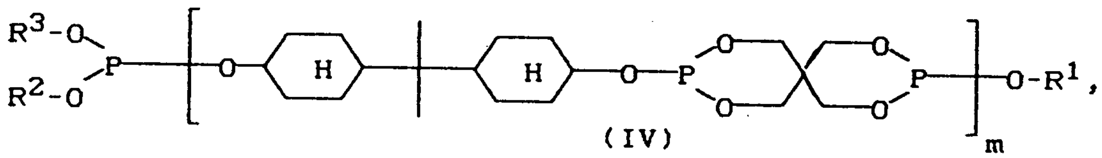

(IV)

worin $R^1$, $R^2$ und $R^3$ gleich oder verschieden sein können und $C_1$-$C_{18}$-Alkyl, Aryl, einen Rest der Struktur V,

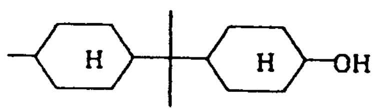

(V)

$R^1$ außerdem einen Rest der Struktur VI,

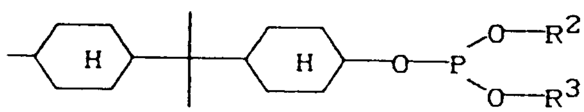

(VI)

$R^2$ und $R^3$ außerdem zusammen einen Rest der Struktur VII darstellen und m

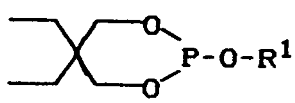

(VII)

eine ganze Zahl von 1-20 bedeuten.

Bevorzugt stellen dar $R^1$, $R^2$ und $R^3$ Methyl, Ethyl, Propyl, Butyl, Isooctyl, Decyl, Dodecyl, Tetradecyl, Octadecyl, $R^1$ außerdem den Rest V und VI und $R^2$ und $R^3$ zusammen den Rest VII, m = 2-15. Besonders bevorzugt sind $R^1$, $R^2$ und $R^3$ Methyl, Ethyl, Octadecyl (Stearyl), $R^1$ außerdem Rest V und VI, $R^2$ und $R^3$ zusammen außerdem Rest VII, m = 2-10.

Ähnliche Stabilisatoren wie unter IV beschrieben sind in der US-PS 3 573 251 offenbart.

Auch diese Phosphite können im Sinne der vorliegenden Erfindung verwendet werden, wobei X bevorzugt Sauerstoff ist.

Gegenstand der vorliegenden Erfindung sind somit gegen thermischen Abbau stabilisierte Neopentylglykol-Polycarbonate die Verbindungen des dreiwertigen Phosphors in Mengen von 0.2 - 3,0 Gew-%, vorzugsweise 0,2 - 1,8 Gew.-%, gegebenenfalls in Kombination mit bekannten Antioxidantien, bezogen auf aliphatische Polycarbonate, enthalten.

Erfindungsgemäß einzusetzendes Neopentylglykol-Polycarbonat entspricht der allgemeinen Formel VIII

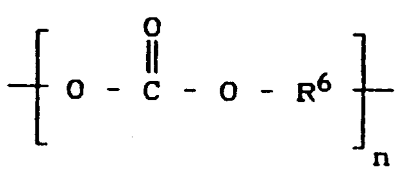

VIII

mit n ≥20
worin
$R^6$ =

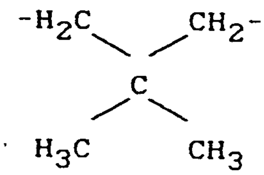

bedeutet.

Die Neopentylglykol-Polycarbonate Können nach üblichen Mebedeutet. thoden z. B. durch Umsetzung oder Phosgenierung von Neopentylglykol (DE-OS 20 01 091, FR-PS 13 91 512, DE-OS 10 31 512, DE-OS 24 46 107, DE-OS 26 05 024, EP 002 641, DE-OS 24 47 349) besser aber durch ringöffnende Masse- und Lösungspolymerisation von cyclischem, Neopentylglykol Carbonat hergestellt werden (DE-OS 15 45 116, 15 45 117, 31 03 135, 32 04 078).

Das bevorzugte Herstellungsverfahren ist die anionische ringöffnende Lösungspolymerisation bei tiefen Temperaturen (DE-OS 36 07 625).

Ausgangprodukt für die Herstellung der erfindungsgemäß einzusetzenden Polycarbonate ist die Verbindung der Formel IX

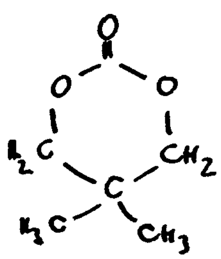 (IX)

Die Molekulargewichte der Neopentylglykol-Polycarbonate können 2.000 g/mol bis 500.000 g/mol, bevorzugt 5.000 g/mol bis 400.000 g/mol, besonders bevorzugt 5.000 bis 120.000 g/mol, betragen.

Geeignete Copolymere mit sequenzartigem Aufbau enthalten Ester entsprechen der idealisierten Formel XI

$-(-A-X-B-)-_n$ (XI)

mit n = 1 bis 20, insbesondere 1 bis 10, worin

-A- = Polymerisat des Carbonats der Formel IX ("Block A").

-B- = Polymerisat eines cyclischen Esters mit der Formel XII ("Block B")

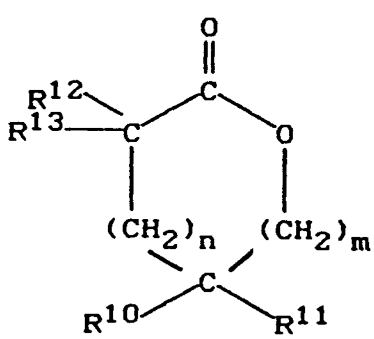 (XII)

mit

$R^{10}$, $R^{11}$, $R^{12}$, $R^{13}$ = H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$

m, n unabhängig voneinander 0, 1, 2, 3, 4, 5 oder 6

und worin

X Mittelstück, enthaltend sowohl das cyclische Carbonat der Formel IX als auch den cyclischen Ester der Formel XII in polymerisierter Form, wobei die Konzentration der Reste IX in Richtung auf -B- und die Konzentration der Reste XII in Richtung auf -A-kontinuierlich abnimmt ("tapered structure").

Bevorzugte Lactone (XII) sind $\epsilon$-Caprolacton und Pivalolacton

In den erfindungsgemäß einzusetzenden Polymeren können die mittleren Molekulargewichte der Blöcke A und B sowie der Mittelstücke X verschieden oder nahezu gleich groß sein.

Die Polymerisate enthalten die Blöcke A bzw. B in Mengen von 5 bis 95 Gew.-% (bezogen auf Gesamtmenge A + B), vorzugsweise aber in Mengen von 5 bis 20 Gew.-% A und 95 bis 80 Gew.-% B (bezogen auf A + B), sowie 5 bis 20 Gew.-% B und 95 bis 80 Gew.-% A (bezogen auf A + B); der Gehalt an Mittelstücken X mit einer "tapered-structure" beträgt 5 bis 95 Gew.-% (bezogen auf A + B + X), vorzugsweise 20 bis 80 Gew.-% (bezogen auf A + B + X).

Die Copolymeren lassen sich aus den Neopentylglykol-Carbonaten und Estern durch anionische ringöffnende Lösungspolymerisation herstellen. Ein sequentieller Aufbau der Copolymeren wird durch eine stufenweise Zugabe der Carbonat/Ester-Mischung zur polymerisationsaktiven Lösung erreicht.

Geeignete Blockcopolymere enthaltend Vinylverbindungen entsprechen der idealisierten Formel XIII

A-B-A; B-A-B oder $(A-B)_x$ (XIII)

mit x = 1 bis 20, insbesondere x = 1 bis 10,
worin

A = Rest eines Homopolymerisats von Styrol, Vinylnaphthalin, Isopropenylnaphthalin oder Butadien1,3, oder Isopren, insbesondere von Styrol oder Butadien-1,3, und

B = Rest eines Homopolymeren eines cyclischen, aliphatischen Carbonats der Formel IX

Die mittleren Molekulargewichte der Blöcke A und B sind größer 800, vorzugsweise größer 1000 und besonders bevorzugt größer 10 000.

In den erfindungsgemäß einzusetzenden Blockcopolymeren können die mittleren Molekulargewichte der Blöcke A und B verschieden oder nahezu gleich groß sein.

Die Blockcopolymeren enthalten den Block A in Mengen von 5 bis 95 Gew.-% und den Block B in Mengen von 95 bis 5 Gew.-%, vorzugsweise aber in Mengen von 5 bis 20 Gew.-% A und 95 bis 80 Gew.-% B sowie 5 bis 20 Gew.-% B und 95 bis 80 Gew.-% A; d.h. in den bevorzugten Blockcopolymeren überwiegt gewichtsmäßig entweder die Komponente A oder B.

Die Blockcopolymeren können durch anionische Polymerisation gemäß der älteren Patentanmeldung P 3 607 627.9 hergestellt werden. Die erfindungsgemäß einzusetzenden Stabilisatoren, und gegebenenfalls Antioxidantien lassen sich nach bekannten Verfahren, z.B. in Knetern oder Extrudern in die Polymeren einmischen.

Die Verarbeitung der Polymerisate richtet sich nach ihren Eigenschaften; Polymerisate mit thermoplastischen Eigenschaften können wie andere Thermoplasten in Formkörper überführt werden.

Die erfindungsgemäß einzusetzenden Stabilisatoren, gegebenenfalls in Kombination mit bekannten Antioxidantien, können den Polymerisaten nach bekannten Verfahren z. B. in Knetern oder Schneckenmaschinen zugegeben werden. Die stabilisierten Polymerisate lassen sich in bekannter Weise pigmentieren, antistatisch und/oder flammwidrig ausrüsten und mit Füllstoffen füllen.

Die Verarbeitung der Polymerisate richtet sich nach ihren Eigenschaften, z.B: können Polymerisate mit thermoplastischen Eigenschaften wie Thermoplasten verformt werden.

Die erfindungsgemäß einzusetzenden Copolymerisate eignen sich vorzugsweise zur Herstellung von Folien, Dichtungen, Beschichtungen, insbesondere dort, wo verbessertes Langzeitverhalten gebraucht wird und zur Herstellung von Verpackungen, insbesondere für Lebensmittel.

Die erfindungsgemäß einzusetzenden Polymerisate lassen sich nach bekannter Weise stabilisieren, pigmentieren und mittels üblicher Additive antistatisch, besser verarbeitbar oder flammfest ausrüsten oder mit Füllstoffen füllen.

Beispiele I. Polyneopentylglykolcarbonat

Ihr thermisches Abbauverhalten wurde wie folgt bestimmt:
In einem Reagenzglas wurden 2 g des Polymeren 40 Minuten auf 210 °C bis 270 °C erhitzt. Die relative Viskosität ($\eta_{rel}$) dieses Polymeren wurde an einer 2 gew.-%igen Lösung in Methylenchlorid ermittelt und der

entsprechenden Viskosität einer unbehandelten Probe gegenübergestellt.

Aus dem Vergleich mit der Viskosität der nicht erhitzten Probe ergibt sich der jeweilige Grad der thermischen Schädigung.

Beispiel 1

Herstellung des Stabilisators gemäß Formel IV

36,6 g (0,27 Mol) Pentaerythrit und 89,6 g (0,54 Mol) Triethylphosphit werden miteinander umgesetzt, wobei unter Normaldruck bis zu einer Sumpftemperatur von 170 °C 44 g Ethanol über eine Kolonne abdestillieren. Dann gibt man 72 g (0,3 Mol) Perhydrobisphenol A hinzu und destilliert bis zu einer Sumpftemperatur von 170 °C weitere 20 g Ethanol ab. Man erhält 130 g eines farblosen spröden Harzes:
Ein Polyneopentylglykolcarbonat mit einer relativen Viskosität $\eta_{rel}$ von 1,58 wurde mit 0,4 Gew.-%, dieser Phosphitverbindung und mit 0,2 Gew.-% 2,6-Di-tert.-butyl-4-methyl-phenol versetzt. Die thermische Stabilität wurde wie oben angegeben bestimmt und mit der einer nicht stabilisierten Probe verglichen.

| | stabilisiert | unstabilisiert |
|---|---|---|
| | $\eta_{rel} - 1$ | |
| Ausgangsviskosität | 0.58 | |
| Temperatur (°C) | | |
| 210 | - | 0.46 |
| 230 | - | 0.38 |
| 250 | 0.58 | 0.05 |
| 270 | 0.42 | 0.08 |

Beispiel 2

Ein Polyneopentylglykolcarbonat, dessen Hydroxylendgruppen mit 1.3.5-Benzoltricarbonsäurechlorid verschlossen sind, mit einer relativen Viskosität $\eta_{rel}$ von 1,21 wurde mit 0,4 Gew.-%, der Phosphitverbindung aus Beispiel 1 und mit 0,2 Gew.-% 2,6-Di-tert.-butyl-4-methyl-phenol versetzt. Die thermische Stabilität wurde wie oben angegeben bestimmt und mit der einer nicht stabilisierten Probe verglichen.

| | stabilisiert | unstabilisiert |
|---|---|---|
| | $\eta_{rel} - 1$ | |
| Ausgangsviskosität | 0.21 | |
| Temperatur (°C) | | |
| 210 | 0.20 | 0.13 |
| 230 | 0.18 | 0.08 |
| 250 | 0.17 | - |

Beispiel 3

Ein durch anionisch Lösungspolymerisation gewonnenes Polyneopentylglykolcarbonat mit einer relativen Viskosität $\eta_{rel}$ von 2.13 wurde wie folgt hergestellt:
Zu einer Lösung von 350 g Neopentylglykolcarbonat in 3.900 g Toluol wurden bei 0 ° C 2 ml n-Butyllithium (2.5 molare Lösung in Hexan) unter Stickstoff gegeben. Die Polymerisationszeit betrug bei dieser Temperatur 4 Stunden. Das Reaktionsgemisch wurde dann mit 80 ml Methanol/Salzsäure (9:1) zersetzt, in Methanol gefällt, durch Filtration isoliert und getrocknet. Der Umsatz betrug 93 %.

Das Polyneopentylglykolcarbonat wurde mit den in 3a - 3d angegebenen Stabilisatoren versetzt. Die thermische Stabilität wurde wie oben bestimmt und mit der einer nicht stabilisierten Probe verglichen.

3a. 0,6 Gew.-% Tris-(nonyl-phenyl)-phosphit
3b. 0,4 Gew.-% Tris-(nonyl-phenyl)-phosphit und 0,2 Gew.-% 2,6-Di-tert.-butyl-4-methylphenol
3c. 0,6 Gew.-% Phosphorigsäureester des Bis (2-hydroxy-3-cyclohexyl-5-methyl-phenyl)-methans
3d. 0,6 Gew.-% Phosphorigsäureester des Bis(2-hydroxy-3-tert.-butyl-5-methyl-phenyl)-methans

| | stabilisiert | | | | unstabilisiert |
|---|---|---|---|---|---|
| | $\eta_{rel} - 1$ | | | | |
| Ausgangsviskosität | 1.13 | | | | |
| Beispiel | 3a | 3b | 3c | 3d | |
| Temperatur (°C) | | | | | |
| 210 | 1.13 | 1.10 | 1.12 | 1.13 | 0.50 |
| 230 | 1.13 | 1.06 | 1.06 | 1.11 | 0.29 |
| 250 | 1.08 | 1.00 | 0.98 | 1.09 | 0.17 |
| 270 | 0.85 | 0.84 | 0.77 | 0.82 | 0.11 |

Beispiele II. Sequenziertes Carbonat-Ester-Copolymer

Das thermische Abbauverhalten von sequenziert aufgebauten Copolymeren auf Basis Neopentylglykol-Carbonat und Ester wurde wie folgt bestimmt:
In einem Reagenzglas wurden 2 g des Polymeren 40 Minuten lang auf 210 ° C bis 270 ° C erhitzt. Die relative Viskosität ($\eta_{rel}$) dieses Polymeren wurde an einer 2 gew.-%igen Lösung im Methylenchlorid ermittelt und der entsprechenden Viskosität einer unbehandelten Probe gegenübergestellt.

Aus dem Vergleich mit der Viskosität der nicht erhitzten Probe ergibt sich der jeweilige Grad der thermischen Schädigung.

Beispiel 1

Sequenziert aufgebautes Copolymer aus Neopentylglykolcarbonat (50 Mol-%) und $\epsilon$-Caprolacton (50 Mol-%).

Zu einer Lösung von 260 g Neopentylglykolcarbonat und 228 g $\epsilon$-Caprolacton in 5 l Toluol wurden bei 0 ° C 6 ml n-Butyllithium (2,5 molare Lösung in Hexan) unter Stickstoff gegeben. Die Polymerisationszeit betrug bei dieser Temperatur 6 Stunden. Das Reaktionsgemisch wurde dann mit 80 ml Methanol/Salzsäure (8:2) zersetzt, in Methanol gefällt, durch Filtration isoliert und getrocknet. Der Umsatz betrug 95 %.

Das sequenziert aufgebaute Copolymer aus Neopentylglykolcarbonat und $\epsilon$-Caprolacton wurde mit den in 1a-1c angegebenen Stabilisatoren versetzt. Die Stabilität wurde wie oben beschrieben bestimmt und mit der einer nichtstabilisierten Probe verglichen.

1a) 0,4 % des nach der folgenden Vorschrift erhaltenen Stabilisators und 0,2 Gew.-% 2,6-Di-tert.-butyl-4-methylphenol
36,6 g (0,27 Mol) Pentaerythrit und 89,6 g (0,54 Mol) Triethylphosphit werden miteinander umgesetzt, wobei unter Normaldruck bis zu einer Sumpftemperatur von 170 ° C 44 g Ethanol über eine Kolonne abdestillieren. Dann gibt man 72 g (0,3 Mol) Perhydrobisphenol A hinzu und destilliert bis zu einer Sumpftemperatur von 170 ° C weitere 20 g Ethanol ab. Man erhält 130 g eines farblosen spröden Harzes.

1b) 0,6 Gew.-% Tris-(nonyl-phenyl)-phosphit
1c) 0,6 Gew.-% Phosphorigsäureester des Bis-(2-hydroxy-3-tert.-butyl-5-methyl-phenyl)-methans.

| | stabilisiert | | | unstabilisiert |
|---|---|---|---|---|
| | $\eta_{rel}$ -1 | | | |
| Ausgangsviskosität | 0,54 | | | |
| Beispiel | 1a | 1b | 1c | |
| Temperatur (°C) | | | | |
| 210 | 0,51 | 0,54 | 0,52 | 0,46 |
| 230 | 0,41 | 0,55 | 0,50 | 0,44 |
| 250 | 0,42 | 0,45 | 0,46 | 0,37 |
| 270 | 0,35 | 0,37 | 0,42 | 0,20 |

Beispiel 2

Sequenziert aufgebautes Copolymer aus Neopentylglykolcarbonat (70 Gew.-%) und ε-Caprolacton (30 Gew.-%)

Zu einer Lösung von 1.050 g Neopentylglykolcarbonat und 450 g ε-Caprolacton in 10 l Toluol wurden bei 0°C 15 ml n-Butyllithium (2,5 molare Lösung in Hexan) unter Stickstoff gegeben. Die Polymerisationszeit betrug bei dieser Temperatur 5 h. Das Reaktionsgemisch wurde dann mit 250 ml Methanol/Salzsäure (8•2) zersetzt, in Methanol gefällt, durch Filtration isoliert und getrocknet. Der Umsatz betrug 96,7 %.

Das sequenziert aufgebaute Copolymer aus Neopentylglykolcarbonat und ε-Caprolacton wurde mit den in 2a-2c angegebenen Stabilisatoren Versetzt. Die thermische Stabilität wurde wie oben bestimmt und mit der einer nichtstabilisierten Probe Verglichen.

2a) 0,6 Gew.-% Tris-(nonyl-phenyl)-phosphit und 0,2 Gew.-% 2,6-Di-tert.-butyl-4-methylphenol
2b) 0,6 Gew.-% Phosphorigsäureester des Bis-(2-hydroxy-3-tert.-butyl-5-methyl-phenyl)-methans und 0,2 Gew.-% 2,6-Di-tert.-butyl-4-methylphenol
2c) 0,6 Gew.-% Phosphorigsäureester des Bis-(2-hydroxy-3-cyclohexyl-5-methyl-phenyl)-methans und 0,2 Gew.-% 2,6-Di-tert.-butyl-4-methylphenol

| | stabilisiert | | | unstabilisiert |
|---|---|---|---|---|
| | $\eta_{rel}$ -1 | | | |
| Ausgangsviskosität | 0,62 | | | |
| Beispiel | 2a | 2b | 2c | |
| Temperatur (°C) | | | | |
| 210 | 0,61 | 0,61 | 0,60 | 0,63 |
| 230 | 0,58 | 0,60 | 0,58 | 0,50 |
| 250 | 0,55 | 0,59 | 0,58 | 0,48 |
| 270 | 0,47 | 0,49 | 0,49 | 0,15 |

Beispiele III. Sequenziertes Carbonat-Vinylverbindungen-Copolymer

Der thermische Abbau von sequenziert aufgebauten Copolymeren aus Neopentylglykol-Carbonat und Vinylverbindungen wurde wie folgt bestimmt:
In einem Reagenzglas wurden 2 g des Polymeren 40 Minuten auf 210 ° C bis 270 ° C erhitzt. Die relative Viskosität ($\eta_{rel}$) dieses Polymeren wurde in einer 2 gew.-%igen Lösung in Methylenchlorid ermittelt und der entsprechenden Viskosität einer unbehandelten Probe gegenübergestellt.

Aus dem Vergleich mit der Viskosität der nicht erhitzten Probe ergibt sich der jeweilige Grad der thermischen Schädigung.

Beispiel 1

Polystyrol-block-polyneopentylglykolcarbonat ($\eta_{rel}$ = 1,49)

Zu einer Lösung von 30 g Styrol in 535 ml Toluol wurden bei 40 ° C 0,6 ml n-Butyllithium (2,5 molare Lösung in Hexan) unter Stickstoff zugegeben. Die Polymerisationszeit betrug bei dieser Temperatur 3h.

Die Lösung von Polystyryllithium wurde dann auf Zimmertemperatur gebracht und bis zur Entfärbung mit Ethylenoxid behandelt. Zu der nun gebildeten Lithiumalkoholatlösung wurden 28 g Neopentylglykolcarbonat gegeben und die Lösung auf -10 ° C gebracht. Nach einer Polymerisationszeit von 4,5h bei dieser Temperatur wurde das Reaktionsgemisch mit 5 ml Methanol/Salzsäure (8:2) zersetzt, das Reaktionsprodukt durch Fällung in Methanol isoliert und getrocknet. Der Umsatz betrug 100 %.

Das Blockcopolymer aus Styrol und Neopentylglykolcarbonat wurde mit den in 1a und 1b angegebenen Stabilisatoren versetzt. Die thermische Stabilität wurde wie oben beschrieben bestimmt und mit der einer nicht stabilisierten Probe verglichen.

1a. 0,6 % des nach folgender Vorschrift erhaltenen Stabilisators.

36,6 g (0,27 Mol) Pentaerythrit und 89,6 g (0,54 Mol) Triethylphosphit werden miteinander umgesetzt, wobei unter Normaldruck bis zu einer Sumpftemperatur von 170 ° 44 g Ethanol über eine Kolonne abdestillieren. Dann gibt man 72 g (0,3 Mol) Perhydrobisphenol A hinzu und destilliert bis zu einer Sumpftemperatur von 170 ° weitere 20 g Ethanol ab. Man erhält 130 g eines farblosen spröden Harzes.

1b. 0,6 % Phosphorigsäureester des Bis (2-hydroxy-3-cyclohexyl-5-methyl-phenyl)methans

| | stabilisiert | | unstabilisiert |
|---|---|---|---|
| | $\eta_{rel-1}$ | | |
| Ausgangsviskosität | 0,49 | | |
| Beispiele | 1a | 1b | |
| Temperatur (°C) | | | |
| 210 | 0,48 | 0,45 | 0,23 |
| 230 | 0,46 | 0,47 | 0,12 |
| 250 | 0,42 | 0,30 | 0,12 |

Beispiel 2

Polystyrol-block-polyneopentylglykolcarbonat ($\eta_{rel}$ = 1,39)

Zu einer Lösung von 27 g Styrol in 400 ml Toluol wurden bei 40 °C 0,6 ml n-Butyllithium (2,5 molare Lösung in Hexan) unter Stickstoff gegeben. Die Polymerisationszeit betrug bei dieser Temperatur 3 Stunden. Die Lösung von Polystyryllithium wurde dann auf Zimmertemperatur gebracht und bis zur Entfärbung mit Ethylenoxid behandelt. Zu der nun gebildeten Lithiumalkoholatlösung wurden 28 g Neopentylglykolcarbonat gegeben und die Lösung auf -10 °C gebracht. Nach einer Polymerisationszeit von 4 Stunden bei dieser Temperatur wurde das Reaktionsgemisch mit 5 ml Methanol/Salzsäure (8:2) zersetzt, das Reaktionsprodukt durch Fallung in Methanol isoliert und getrocknet. Der Umsatz betrug 100 %.

Das Blockcopolymerisat aus Styrol und Neopentylglykolcarbonat wurde mit den in 2a-2d angegebenen Stabilisatoren versetzt. Die thermische Stabilität wurde wie oben beschrieben bestimmt und mit der einer nicht stabilisierten Probe verglichen.

2a. 0,6 Gew.-% Tris-(nonyl-phenyl)-phosphit

2b. 0,6 Gew.-% des Phosphits gemäß Beispiel 1a und 0,2 Gew.-% 2,6-Di-tert.-butyl-4-methylphenol

2c. 0,6 Gew.-% Phosphorigsäureester des Bis-(2-hydroxy-3-cyclohexyl-5-methyl-phenyl)-methans und 0,2 Gew.-% 2,6-Di-tert.-butyl-4-methylphenol

2d. 0,6 Gew.-% Phosphorigsäureester des Bis-(2-hydroxy-3-tert.-butyl-5-methyl-phenyl)-methans und 0,2 Gew.-% 2,6-Di-tert.-butyl-4-methylphenol

| | stabilisiert | | | | unstabilisiert |
|---|---|---|---|---|---|
| | $\eta_{rel-1}$ | | | | |
| Ausgangsviskosität | 0,39 | | | | |
| Beispiele | 2a | 2b | 2c | 2d | |
| Temperatur (°C) | | | | | |
| 210 | 0,40 | 0,39 | 0,39 | 0,37 | 0,27 |
| 230 | 0,33 | 0,39 | 0,40 | 0,38 | 0,18 |
| 250 | 0,18 | 0,38 | 0,32 | 0,28 | 0,12 |

**Patentansprüche**

1. Gegen thermischen Abbau stabilisiertes Neopentylglykol Polycarbonat, enthaltend 0.2 - 3,0 Gew.-%, bezogen auf Polycarbonat einer Verbindung des dreiwertigen Phosphors.

2. Polycarbonat gemäß Anspruch 1, enthaltend 0.2 - 3,0 Gew.-% einer Phosphorverbindung der Formel I

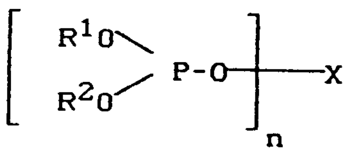

(I)

in der bedeuten:

| | |
|---|---|
| X | Wasserstoff, einen gegebenenfalls substituierten aliphatischen, cycloaliphatischen oder aromatischen Rest mit 1 bis 18 C-Atomen oder einen Alkaryl oder Aralkylrest mit 7 bis 24 C-Atomen, der auch olefinische Doppelbindungen und Heteroatome enthalten kann, |
| n | eine ganze Zahl von 1 bis 4, entsprechend der Bindigkeit von X, |
| $R^1$ und $R^2$ | unabhängig voneinander $C_1$-$C_{18}$-Alkyl, $C_5$ bis $C_{15}$-Cycloalkyl, $C_7$ bis $C_{24}$-Aralkyl oder Alkaryl oder $C_6$ bis $C_{24}$-Aryl, |
| $R^1$ und X | gemeinsam eine gegebenenfalls substituierte $C_2$ bis $C_4$ Alkylenkette |
| $R^1$, $R^2$ und X | zusammen einen geradkettigen oder verzweigten $C_1$ bis $C_9$-Alkyl oder $C_5$ bis $C_7$-Cycloalkylrest, der mit 3-6-gliedrigen cyclischen Resten, die als Heteroatome O und S enthalten, substituiert sein kann. |

3. Polycarbonat gemäß Anspruch 1, enthaltend 0.2 - 3,0 Gew.-% einer Phosphorverbindung der Formel II

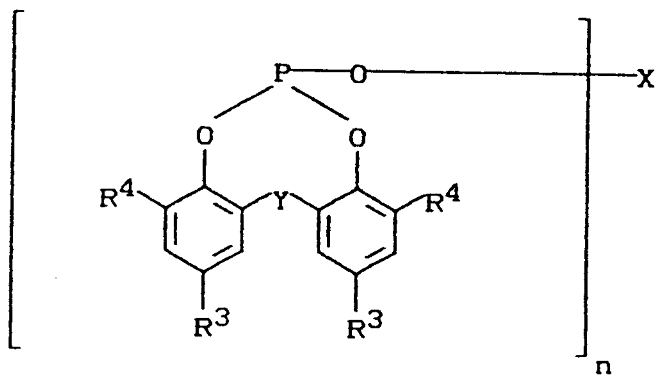

(II)

in der bedeuten:

| | |
|---|---|
| X | Wasserstoff, einen gegebenenfalls substituierten aliphatischen, cycloaliphatischen oder aromatischen Rest mit 1 bis 18 C-Atomen oder einen Alkaryl oder Aralkylrest mit 7 bis 24 C-Atomen, die auch olefinische Doppelbindungen und Heteroatome (bevorzugt O, S und nichtbasische Stickstoffe) enthalten können, |
| n | eine ganze Zahl von 1 bis 4, entsprechend der Bindigkeit von X, |
| $R^3$ und $R^4$ | gleiche oder verschiedene $C_{1-9}$ aliphatische $C_{5-6}$ cycloaliphatische und $C_{7-9}$-Aralkyl oder $C_{6-10}$-Arylreste, |
| Y | für S oder $HCR^5$ steht, wobei $R^5$ = H, $C_{1-6}$-Alkyl-, Cyclohexenyl- oder Cyclohexyl. |

4. Polycarbonat gemäß Anspruch 1, enthaltend 0.2 - 3,0 Gew.-% eines Stabilisators der Formeln III oder IIIa

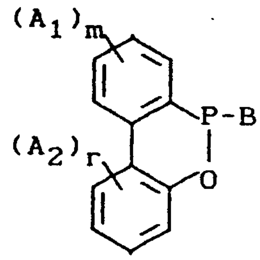

(III)

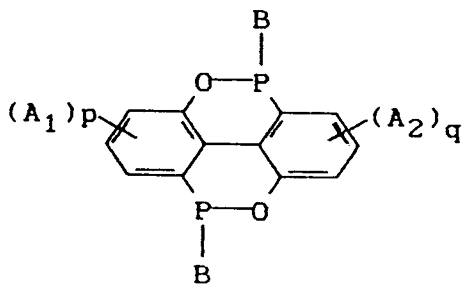

(IIIa)

worin B Wasserstoff, Hydroxyl, Halogen, $C_1$-$C_{22}$-Alkyl, $C_1$-$C_{22}$-Alkoxy, $C_1$-$C_{22}$-Alkylthio, Aryloxy oder Arylthio, $A_1$ und $A_2$, die gleich oder verschieden sein können, Wasserstoff, Halogen, $C_1$-$C_{18}$-Alkyl, $C_1$-$C_{18}$-Alkyloxy, Aryl, Aryloxy, Acyl, Cyan, wobei die Reste $A_1$ und $A_2$ zusammen mit dem Biphenylring auch einen Phenanthrenring bilden können, m und r ganze Zahlen von 0 bis 4 und p und q ganze Zahlen von 0 bis 3 bedeuten.

**5.** Polycarbonat gemäß Anspruch 1, enthaltend 0.2 - 0,3 Gew.-% eines Phosphitstabilisators, der aus Pentaerythrit, Perhydrobisphenol A, Monoalkoholen und Phosphorigsäureestern erhalten worden ist.

**6.** Polycarbonat gemäß Anspruch 1, enthaltend zusätzlich bekannte Antioxidantien.

## Claims

**1.** A neopentyl glycol polycarbonate stabilized against thermal degradation containing 0.2 to 3.0% by weight, based on polycarbonate, of a compound of trivalent phosphorus.

**2.** A polycarbonate as claimed in claim 1 containing 0.2 to 3.0% by weight of a phosphorus compound corresponding to the following formula

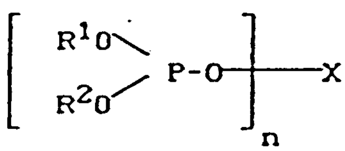

(I)

in which

| | |
|---|---|
| X | is hydrogen, an optionally substituted aliphatic, cycloaliphatic or aromatic $C_{1-18}$ radical or a $C_{7-24}$ alkaryl or aralkyl radical which may also contain olefinic double bonds and heteroatoms, |
| n | is an integer of 1 to 4 according to the covalence of X, |
| $R^1$ and $R^2$ | independently of one another are $C_{1-18}$ alkyl, $C_{5-15}$ cycloalkyl, $C_{7-24}$ aralkyl or alkaryl or $C_{6-24}$ aryl, |
| $R^1$ and X | together represent an optionally substituted $C_{2-4}$ alkylene chain, |
| $R^1$, $R^2$ and X | together represent a straight-chain or branched $C_{1-9}$ alkyl or $C_{5-7}$ cycloalkyl radical which may be substituted by 3 to 6-membered cyclic radicals containing O |

and S as heteroatoms.

**3.** A polycarbonate as claimed in claim 1 containing 0.2 to 3.0% by weight of a phosphorus compound corresponding to the following formula

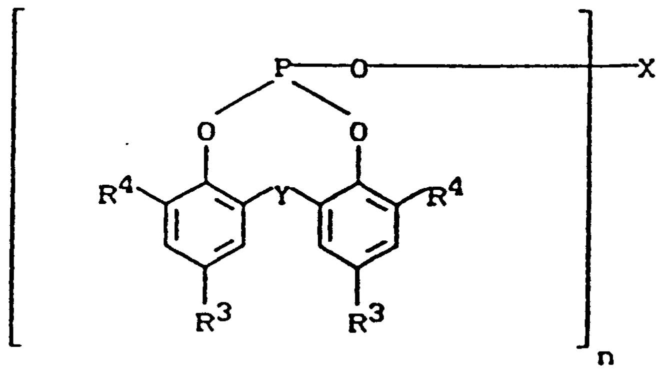

(II)

in which

| | |
|---|---|
| X | is hydrogen, an optionally substituted aliphatic, cycloaliphatic or aromatic $C_{1-18}$ radical or a $C_{7-24}$ alkaryl or aralkyl radical which may also contain olefinic double bonds and heteroatoms (preferably O, S and non-basic nitrogens), |
| n | is an integer of 1 to 4 according to the covalence of X, |
| $R^3$ and $R^4$ | may be the same or different and represent $C_{1-9}$ aliphatic, $C_{5-6}$ cycloaliphatic and $C_{7-9}$aralkyl or $C_{6-10}$ aryl radicals, |
| Y | is S or $HCR^5$ where $R^5$ = H, $C_{1-6}$ alkyl, cyclohexenyl or cyclohexyl. |

**4.** A polycarbonate as claimed in claim 1 containing 0.2 to 3.0% by weight of a stabilizer corresponding to formula III or IIIa

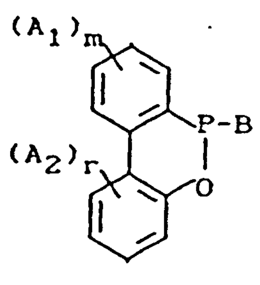

(III)

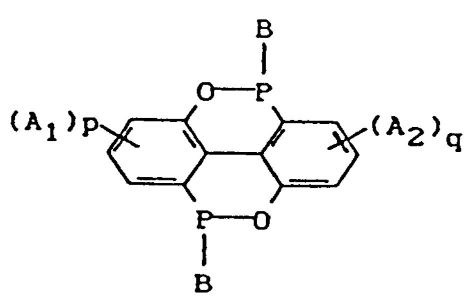

(IIIa)

in which
B is hydrogen, hydroxyl, halogen, $C_{1-22}$ alkyl, $C_{1-22}$ alkoxy, $C_{1-22}$ alkylthio, aryloxy or arylthio, $A_1$ and $A_2$ may be the same or different and represent hydrogen, halogen, $C_{1-18}$ alkyl, $C_{1-18}$ alkyloxy, aryl, aryloxy, acyl, cyano, in addition to which $A_1$ and $A_2$ together with the biphenyl ring may also form a

phenanthrene ring, m and r are integers of 0 to 4 and p and g are integers of 0 to 3.

5. A polycarbonate as claimed in claim 1 containing 0.2 to 0.3% by weight of a phosphite stabilizer which has been obtained from pentaerythritol, perhydrobisphenol A, monoalcohols and phosphorous acid esters.

6. A polycarbonate as claimed in claim 1 additionally containing known antioxidants.

**Revendications**

1. Polycarbonate du néopentylglycol stabilisé contre les dégradations à la chaleur, contenant 0,2 à 3,0% de son poids d'un composé du phosphore trivalent.

2. Polycarbonate selon la revendication 1, contenant 0,2 à 3,0% en poids d'un composé du phosphore de formule (I) :

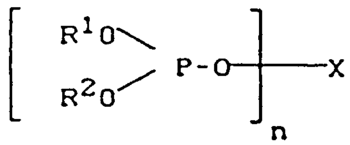

(I)

dans laquelle

| | |
|---|---|
| X | représente l'hydrogène, un radical aliphatique, cycloaliphatique ou aromatique éventuellement substitué en $C_1$-$C_{18}$ ou un radical alkylaryle ou aralkyle en $C_7$-$C_{24}$, qui peut également contenir des doubles liaisons oléfiniques et des hétéroatomes, |
| n | est un nombre entier allant de 1 à 4, en fonction de la valence de X, |
| $R^1$ et $R^2$ | représentent chacun, indépendamment l'un de l'autre, un groupe alkyle en $C_1$-$C_{18}$, cycloalkyle en $C_5$-$C_{15}$, aralkyle ou alkylaryle en $C_7$-$C_{24}$ ou aryle en $C_6$-$C_{24}$, |
| $R^1$ et X | peuvent former ensemble une chaîne alkylène en $C_2$-$C_4$ éventuellement substituée, |
| $R^1$, $R^2$ et X | peuvent former ensemble un radical alkyle à chaîne droite ou ramifiée en $C_1$-$C_9$ ou cycloalkyle en $C_5$-$C_7$, qui peut être substitué par des radicaux cycliques de 3 à 6 chaînons contenant O et S en tant qu'hétéroatomes. |

3. Polycarbonate selon la revendication 1, contenant 0,2 à 3,0% en poids d'un composé du phosphore répondant à la formule (II) :

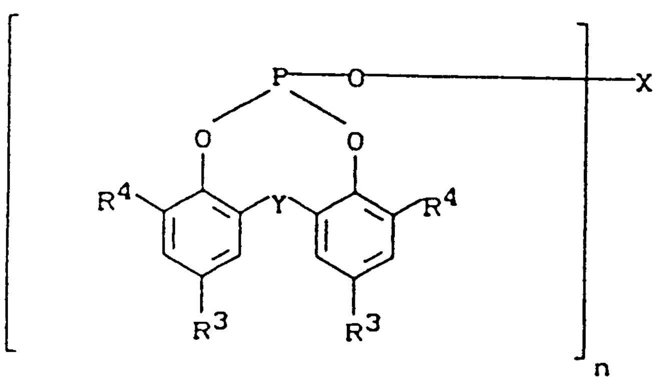

(II)

dans laquelle

| | |
|---|---|
| X | représente l'hydrogène, un radical aliphatique, cycloaliphatique ou aromatique éventuellement substitué en $C_1$-$C_{18}$ ou un radical alkylaryle ou aralkyle en $C_7$-$C_{24}$, qui peuvent également contenir des doubles liaisons oléfiniques et des hétéroatomes (de préférence O, S et l'azote non basique), |
| n | est un nombre entier allant de 1 à 4 en fonction de la valence de X, |

$R^3$ et $R^4$, ayant des significations identiques ou différentes, représentent chacun un radical aliphatique en $C_1$-$C_9$, cycloaliphatique en $C_5$-$C_6$ ou un radical aralkyle en $C_7$-$C_9$ ou aryle en $C_6$-$C_{10}$,

Y représente S ou $HCR^5$ dans lequel $R^5$ = H, alkyle en $C_1$-$C_6$, cyclohexényle ou cyclohexyle.

**4.** Polycarbonate selon la revendication 1, contenant 0,2 à 3,0% en poids d'un stabilisant de formule (III) ou (IIIa) :

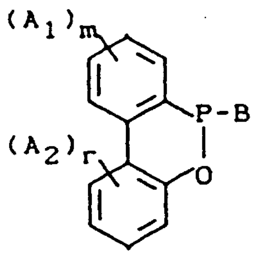

(III)

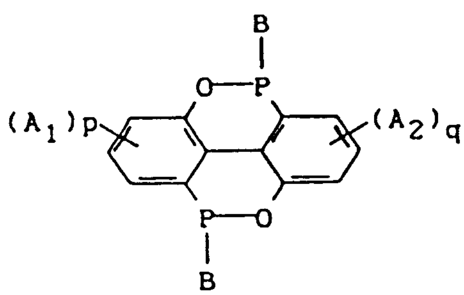

(IIIa)

dans lesquelles

B représente l'hydrogène, un groupe hydroxy, un halogène, un groupe alkyle en $C_1$-$C_{22}$, alcoxy en $C_1$-$C_{22}$, alkylthio en $C_1$-$C_{22}$, aryloxy ou arylthio, $A_1$ et $A_2$, ayant des significations identiques ou différentes, représentent chacun l'hydrogène, un halogène, un groupe alkyle en $C_1$-$C_{18}$, alcoxy en $C_1$-$C_{18}$, aryle, aryloxy, acyle, cyano, les groupes $A_1$ et $A_2$ pouvant également former ensemble et avec le cycle biphényle un cycle phénanthrène, m et r sont des nombres entiers de 0 à 4 et p et q des nombres entiers de 0 à 3.

**5.** Polycarbonate selon la revendication 1, contenant 0,2 à 0,3% en poids d'un phosphite stabilisant obtenu à partir du pentaérythritol, du perhydrobisphénol A, de monoalcools et d'esters phosphoreux.

**6.** Polycarbonate selon la revendication 1, contenant en outre des antioxydants connus.